# EUROPÄISCHE PATENTANMELDUNG

(11) **EP 1 659 048 A1**
(43) Veröffentlichungstag der Anmeldung: **24.05.2006**
(21) Anmeldenummer: 05110787.8
(22) Anmeldetag: 16.11.2005
(51) Int. Cl.: B62D 25/16, B62D 25/18

(54) **Halterungsanordnung eines Kotschützers für ein landwirtschaftliches Fahrzeug**

(30) Priorität: 20.11.2004 DE 102004056025
(71) Anmelder: DEERE & COMPANY, Moline, Illinois 61265-8098 (US)
(72) Erfinder: Teich, Michael, 68199, Mannheim (DE)
(74) Vertreter: Holst, Sönke

(57) **Zusammenfassung**

Die Erfindung bezieht sich auf eine Halterungsanordnung (34) eines Kotschützers (32) für ein landwirtschaftliches Fahrzeug, mit einem ersten Halterungselement (36), das mit einem Achsgehäuse (12) oder einer Nabenbaugruppe (14) eines lenkbaren Rads des Fahrzeugs verbunden oder verbindbar ist, einem zweiten, den Kotschützer (32) haltenden Halterungselement (40), das um eine sich zumindest näherungsweise vertikal erstreckende Schwenkachse (42) drehbar mit dem ersten Halterungselement (36) verbunden ist, sowie mit einem Verbindungszusammenbau (60), der mit dem zweiten Halterungselement (40) verbunden und eingerichtet ist, bei einer Lenkbewegung der Nabenbaugruppe (14) eine zur Drehung der Nabenbaugruppe (14) gleichsinnige, ihr gegenüber jedoch untersetzte Drehung des zweiten Halterungselements (40) und somit des Kotschützers (32) zu bewirken.

Es wird vorgeschlagen, dass der Verbindungszusammenbau (60) im Abstand von der Nabenbaugruppe (14) mit einem zur Erzeugung der Lenkbewegung des Rads eingerichteten Aktor (20) verbunden oder verbindbar ist.

## Beschreibung

### Stand der Technik

Die Erfindung betrifft eine Halterungsanordnung eines Kotschützers für ein landwirtschaftliches Fahrzeug, mit einem ersten Halterungselement, das mit einem Achsgehäuse oder einer Nabenbaugruppe eines lenkbaren Rads des Fahrzeugs verbunden oder verbindbar ist, einem zweiten, den Kotschützer haltenden Halterungselement, das um eine sich zumindest näherungsweise vertikal erstreckende Schwenkachse drehbar mit dem ersten Halterungselement verbunden ist, sowie mit einem Verbindungszusammenbau, der mit dem zweiten Halterungselement verbunden und eingerichtet ist, bei einer Lenkbewegung der Nabenbaugruppe eine zur der Drehung der Nabenbaugruppe gleichsinnige, ihr gegenüber jedoch untersetzte Drehung des zweiten Halterungselements und somit des Kotschützers zu bewirken.

Bei Traktoren sind in der Regel die vorderen Räder lenkbar. Letztere sind oft mit Kotschützern versehen, die an der das eigentliche Rad halternden Nabenbaugruppe befestigt sind, so dass sie sich bei einer Lenkbewegung gleichsinnig und mit demselben Winkel wie das zugeordnete Rad um die Hochachse drehen (DE 34 01 631 A, EP 0 913 320 A). Hier stellt sich das Problem einer Reduzierung des möglichen Lenkwinkelbereichs, da die Kotschützer bei größeren Lenkausschlägen am Fahrgestell des Traktors anschlagen können.

Es wurde vorgeschlagen (DE 34 02 754 A, EP 0 694 466 A, US 5 074 573 A, US 332 022 A), den Kotschützer über eine Feder mit der Nabenbaugruppe zu koppeln, so dass sich die Feder beim Anschlagen des Kotschützers am Fahrgestell in sich bewegt und Beschädigungen des Kotschützers und des Fahrgestells vermieden werden.

In der DE 36 07 000 A wird vorgeschlagen, dass ein mit dem Kotschützer verbundenes Element in ein zur Schwenkachse des Rades konzentrisch angeordnetes Langloch in einer mit der Nabe verbundenen Platte eingreift und dort durch eine Feder in die Ruheposition vorgespannt wird. Wird das Rad nach außen gelenkt, schlägt das mit dem Kotschützer verbundene Element am Ende des Langlochs an, so dass sich der Kotschützer synchron mit dem Rad bewegt. Wird das Rad nach innen gelenkt, drückt die Feder zunächst noch das Element gegen das Ende des Langlochs, so dass sich der Kotschützer ebenfalls synchron mit dem Rad bewegt. Sobald die Halterung des Kotschützers jedoch an einem Anschlag anliegt, bewegt sich das Element im Langloch, so dass sukzessive die Feder gespannt wird und der Kotschützer sich nicht weiter nach innen bewegt. Eine ähnliche Anordnung wird in der EP 0 850 820 A und der DE 200 13 118 U beschrieben. Die EP 1 046 573 A schlägt vor, den Kotflügel beim Erreichen der Endpositionen mittels eines Keils oder einer Nockenfläche um eine horizontale Achse nach außen zu verschwenken, während er gemäß der FR 2 813 847 A dann nach außen verschoben wird.

In einer zweiten Ausführungsform der DE 36 07 000 A steht die Halterung des Kotschützers durch eine Gestängeanordnung, die eine Untersetzung realisiert, mit der Nabe des Rads und dem Achsgehäuse in Verbindung.

Die EP 0 827 895 A beschreibt eine ähnliche Halterung des Kotschützers. In einer Ausführungsform ist die Halterung des Kotschützers um eine parallel zur Schwenkachse des Rads verlaufende Achse, die jedoch gegenüber der Schwenkachse des Rads nach außen versetzt ist, schwenkbar an der Nabe gelagert. Außerdem greift die Halterung in ein sich horizontal und quer zur Fahrtrichtung erstreckendes Langloch in einer mit der Achse verbundenen Platte ein. Dadurch erzielt man eine Untersetzung der Schwenkbewegung des Rades, so dass der Kotschützer einen gegenüber dem Rad reduzierten Drehwinkelbereich aufweist und nicht am Fahrgestell anstößt. In der anderen, analog wirkenden Ausführungsform ist die Halterung drehbar an der Achse gelagert und greift in ein Langloch am Nabenzusammenbau ein.

Die beschriebenen, mit Federn versehenen Halterungsanordnungen weisen u. A. den Nachteil auf, dass sich in der Arbeitsumgebung eines landwirtschaftlichen Traktors schnell Verunreinigungen in den Federn ansammeln, die eine ordnungsgemäße Funktion verhindern.

Die Gestängeanordnung nach DE 36 07 000 A ist relativ aufwändig. Die ähnlich wirkende Halterung nach EP 0 827 895 A erfordert eine rotorische und eine translatorische Kinematik. Insbesondere letztere ist in der Arbeitsumgebung eines Traktors recht störungsanfällig. Außerdem ist die Schwenkachse der rotorischen Kinematik gegenüber der Schwenkachse des Rades nach außen versetzt, ragt somit in die Felgen hinein. Bei kleineren Bereifungen fehlt der entsprechende Freiraum, so dass die Halterungsanordnung dort nicht anwendbar ist.

### Aufgabe der Erfindung

Die der Erfindung zu Grunde liegende Aufgabe wird darin gesehen, eine zuverlässige und universell anwendbare Halterungsanordnung eines Kotschützers für einen Traktor bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Halterungsanordnung eines Kotschützers vorgeschlagen, die zumindest ein erstes Halterungselement, ein zweites Halterungselement und einen Verbindungszusammenbau umfasst. Das erste Halterungselement ist im montierten Zustand mit einer Nabenbaugruppe eines lenkbaren Rades verbunden. Wird die Nabenbaugruppe durch einen Aktor gelenkt, bewegt er sich gemeinsam mit dem ersten Halterungselement um die Schwenkachse der Nabenbaugruppe. Das zweite Halterungselement ist um eine zumindest etwa vertikal verlaufende Achse, die in der Regel parallel zur Schwenkachse der Nabenbaugruppe verläuft, am ersten Halterungselement drehbar gelagert. Es hält den eigentlichen Kotschützer, der in der Literatur auch als Fangschale bezeichnet wird. Der Verbindungszusammenbau wird im Abstand von der Nabenbaugruppe direkt oder indirekt mit dem Aktor verbunden und stellt im montierten Zustand eine Antriebsverbindung zwischen dem zur Erzeugung der Lenkbewegung des Rades dienenden Aktor einerseits und dem zweiten Halterungselement andererseits her. Dabei erfolgt eine Untersetzung der Lenkbewegung, um zu erreichen, dass sich die zweite Halterung und damit der Kotschützer in geringerem Maße als die Räder drehen und dadurch den maximalen Lenkwinkel nicht durch den Kotschützer zu begrenzen. Anzumerken ist noch, dass das erste Halterungselement anstelle an der Nabenbaugruppe auch am benachbarten Achsgehäuse fixiert werden könnte.

Durch die erfindungsgemäße Ankopplung des Verbindungselements an den Aktor für die Lenkbewegung erhält man einen von der Lenkbewegung der Nabenbaugruppe unabhängigen Antrieb für das zweite Halterungselement und somit den Kotschützer, der sich auf einfache Weise untersetzen lässt, um die gegenüber der Lenkbewegung untersetzte Bewegung des Kotschützers zu erzielen. Der Kotschützer folgt der Lenkbewegung in beide Lenkrichtungen, was sich beispielsweise beim Verdichten von Fahrsilos als vorteilhaft erweist, da der Kotschützer nicht an die Silowand anstößt.

In einer bevorzugten Ausführungsform ist der Verbindungszusammenbau mit einer Spurstange verbindbar bzw. im montierten Zustand mit ihr verbunden. Die Spurstange erstreckt sich zwischen dem Aktor (in der Regel einem Lenkzylinder) und einem Spurstangenanbringungselement der Nabenbaugruppe, um die Lenkbewegung des Aktors auf die Nabenbaugruppe und auf das Rad zu übertragen. Die Befestigung des Verbindungszusammenbaus an der Spurstange kann durch eine oder mehrere Schellen erfolgen. Denkbar wäre jedoch auch eine direkte Verbindung zwischen dem Verbindungszusammenbau und dem Aktor, z. B. dem Kolben des Lenkzylinders.

Der Verbindungszusammenbau umfasst vorzugsweise eine Hebelanordnung mit einem ersten Hebel und einem zweiten Hebel. Der erste Hebel ist starr mit dem zweiten Halterungselement verbunden, während der zweite Hebel einen Endes schwenkbar am ersten Hebel und anderen Endes schwenkbar am Aktor angelenkt ist. Beide Schwenkachsen verlaufen jeweils parallel zur Schwenkachse, um die das zweite Halterungselement am ersten Halterungselement gelagert ist. Über den Hebelmechanismus wird die Bewegung des Aktors in die gewünschte Bewegung des zweiten Halterungselements umgesetzt. Das gewünschte Übersetzungsverhältnis kann durch eine geeignete Dimensionierung der beiden Hebel erzielt werden. Falls die Achse, um die die Nabenbaugruppe beim Lenken verschwenkt wird, nicht parallel zur Schwenkachse des zweiten Halterungselements ist, bietet sich zur Ankopplung des zweiten Hebels am Aktor ein Kugelgelenk an. Da nur Rotationslager verwendet werden, entfällt eine störungsanfällige translatorische Übertragung.

Der erfindungsgemäße Verbindungszusammenbau ermöglicht es, die Schwenkachse des zweiten Halterungselements am ersten Halterungselement gegenüber der Drehachse der Nabenbaugruppe quer zur Vorwärtsrichtung nach innen zu verlagern. Dadurch entsteht kein störender Eingriff in den Innenraum der Felge.

Der erfindungsgemäße Kotschützerzusammenbau kann an lenkbaren Vorderachsen von Traktoren montiert werden. Er könnte auch an einer lenkbaren Hinterachse eines Traktors und/oder an Vorder- oder Hinterachsen von anderen insbesondere land- oder bauwirtschaftlichen Fahrzeugen Verwendung finden, wie Teleskop- oder Radladern.

### Ausführungsbeispiel

In den Zeichnungen ist ein nachfolgend näher beschriebenes Ausführungsbeispiel der Erfindung dargestellt. Es zeigt:
- Fig. 1: eine perspektivische Ansicht einer Hälfte einer lenkbaren Vorderachse eines Traktors mit einem Vorderrad und einer Halterungsanordnung eines Kotschützers;
- Fig. 2: eine perspektivische Ansicht der Vorderachse und der Halterungsanordnung in nach innen gelenkter Stellung,
- Fig. 3: eine perspektivische Ansicht der Vorderachse und der Halterungsanordnung in nach außen gelenkter Stellung,
- Fig. 4: eine Ansicht der Halterungsanordnung mit dem Kotschützer von vorn, und
- Fig. 5: ein Diagramm, in dem der Winkel des Kotschützers in Abhängigkeit vom Lenkwinkel eingetragen ist.

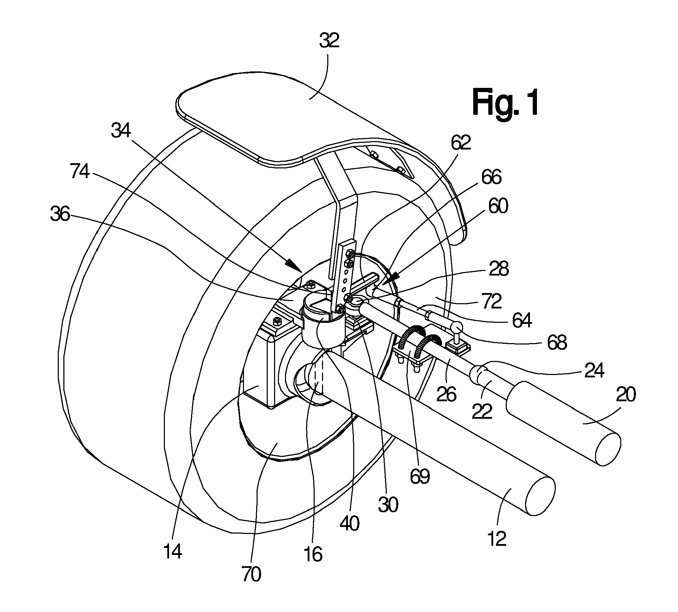

Die Figur 1 zeigt in schematischer Darstellung eine Hälfte einer lenkbaren Vorderachse eines landwirtschaftlichen Traktors in perspektivischer Darstellung. Die Vorderachse 10 umfasst ein sich quer zur Vorwärtsrichtung V erstreckendes Achsgehäuse 12, an dessen äußerem Ende eine Nabenbaugruppe 14 um eine sich etwa vertikal erstreckende Achse 16 drehbar angelenkt ist. Die Nabenbaugruppe 14 ist mit einem (in der Zeichnung nicht erkennbaren, da durch den Reifen 72 verdeckten) Flansch zur Aufnahme einer Felge 70 verbunden. Die Felge 70 mit einem Reifen 72 ist am Flansch der Nabenbaugruppe 14 montiert. Die Achse 16 kann in an sich bekannter Weise leicht entgegen der Vorwärtsrichtung V nach hinten und/oder nach innen geneigt und gegenüber der Drehachse der Felge 70 nach hinten versetzt sein. Falls die Vorderachse antreibbar ist, der Traktor demnach einen Allradantrieb hat, enthält das Achsgehäuse 12 eine Antriebswelle und die Nabenbaugruppe 14 in der Regel ein Vorgelege.

Zur Erzeugung der Lenkbewegung dient ein Aktor 20 in Form eines hydraulischen Lenkzylinders, dessen Kolbenstange 22 über eine Schwenklagerung 24 mit einer Spurstange 26 verbunden ist. Die Spurstange 26 ist an ihrem anderen Ende über eine weitere Schwenklagerung 28 mit einem Spurstangenanbringungselement 30 der Nabenbaugruppe 14 verbunden. Die Schwenklagerungen 24 und 28 sind jeweils um eine sich parallel zur Achse 16 erstreckende Schwenkachse drehbar. Das zweite, in der Figur 1 nicht dargestellte Rad ist ebenfalls mit dem Kolben des Aktors 20 verbunden, entweder durch eine den Zylinder durchdringende Kolbenstange oder eine Verbindungsstange außerhalb des Gehäuses des Aktors 20.

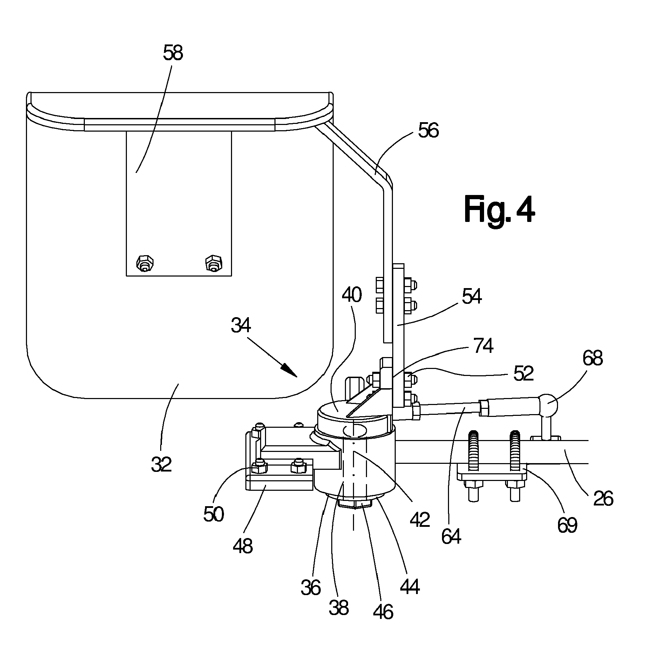

Der Aufbau einer Halterungsanordnung 34 für einen Kotschützer 32 lässt sich am Besten anhand einer Gesamtschau der Figuren 1 und 4 erkennen. Die Halterungsanordnung 34 umfasst ein erstes Halterungselement 36, das im montierten Zustand an der Oberseite der Nabenbaugruppe 14 befestigt ist. Es besitzt ein durchgehendes Loch 38 (insbesondere Bohrung), in das ein passender, zylindrischer Zapfen an der Unterseite eines zweiten Halterungselements 40 eingeführt und an der Unterseite des Lochs 38 durch eine Scheibe 44 und eine Schraube 46 gesichert ist, die in ein Gewinde in der Unterseite des Zapfens eindringt. Das Loch 38 und der Zapfen definieren eine näherungsweise vertikale Schwenkachse 42 des zweiten Halterungselements 40 gegenüber dem ersten Halterungselement 36, die sich mehr oder weniger parallel zur Achse 16 erstrecken kann. Wie anhand der Figur 1 erkennbar ist, liegt die Schwenkachse 42 gegenüber der Achse 16 quer zur Vorwärtsrichtung V nach innen versetzt oberhalb des Achsgehäuses 12.

Zur Befestigung des ersten Halterungselements 36 an der Nabenbaugruppe 14 dient ein am ersten Halterungselement 36 angegossener Flansch 48, der durch Schrauben 50 mit dem Gehäuse der Nabenbaugruppe 14 verschraubt wird. Es wäre auch denkbar, das erste Halterungselement 36 einteilig mit dem Gehäuse der Nabenbaugruppe 14 zu gestalten. Möglich wäre weiterhin, das erste Halterungselement 36 am der Nabenbaugruppe 14 benachbarten Bereich des Achsgehäuses 12 zu fixieren oder damit einteilig zu gestalten.

Das zweite Halterungselement 40 ist durch Schrauben 52 mit einer sich nach oben erstreckenden Strebe 54 verbunden, die wiederum mit einem gebogenen Arm 56 verschraubt ist, der ein sich an der Innenseite des Kotschützers 32 erstreckendes Gestell 58 trägt. Der eigentliche Kotschützer 32 ist in der Regel aus Kunststoff hergestellt und mit dem Gestell 58 verschraubt.

Der Kotschützer 32 soll sich beim Lenken gemeinsam mit der Nabenbaugruppe 14 und dem daran befestigten Rad bewegen, jedoch in einem kleineren Winkelbereich, um ein Anschlagen des Kotschützers 32 am Fahrgestell des Traktors zu vermeiden. Die zu diesem Zweck vorgesehene Kinematik umfasst einen Verbindungszusammenbau 60 mit einem ersten Hebel 62 und einem zweiten Hebel 64. Der erste Hebel 62 ist starr mit dem zweiten Halterungselement 40 verbunden bzw. einteilig damit hergestellt und über eine Schwenklagerung 66 mit dem zweiten Hebel 64 gekoppelt. Der zweite Hebel 64 ist anderen Endes wiederum durch ein Kugelgelenk 68 an der Spurstange 26 angelenkt. Die Schwenklagerungen 66 und das Kugelgelenk 68 erlauben jeweils zur Schwenkachse 42 parallele Schwenkbewegungen, wobei das Kugelgelenk 68 die nicht unbedingt parallelen Stellungen der Achsen 16 und 42 kompensiert. Wenn die Schwenkachse 42 parallel zur Achse 16 verlaufen würde, könnte man das Kugelgelenk 68 durch ein einfaches Schwenklager ersetzen. Zur Verbindung zwischen der Spurstange 26 und dem Kugelgelenk 68 dient eine die Spurstange 26 umschließende Schellenanordnung 69. In der Geradeausstellung des Rades erstreckt sich der erste Hebel 62 oberhalb der Schwenklagerung 28 in der Vorwärtsrichtung des Traktors, während sich der zweite Hebel 64 etwa horizontal und quer zur Vorwärtsrichtung erstreckt. Der Höhenunterschied zwischen der Schellenanordnung 69 und dem Kugelgelenk 68 wird durch eine vertikale Stange überbrückt.

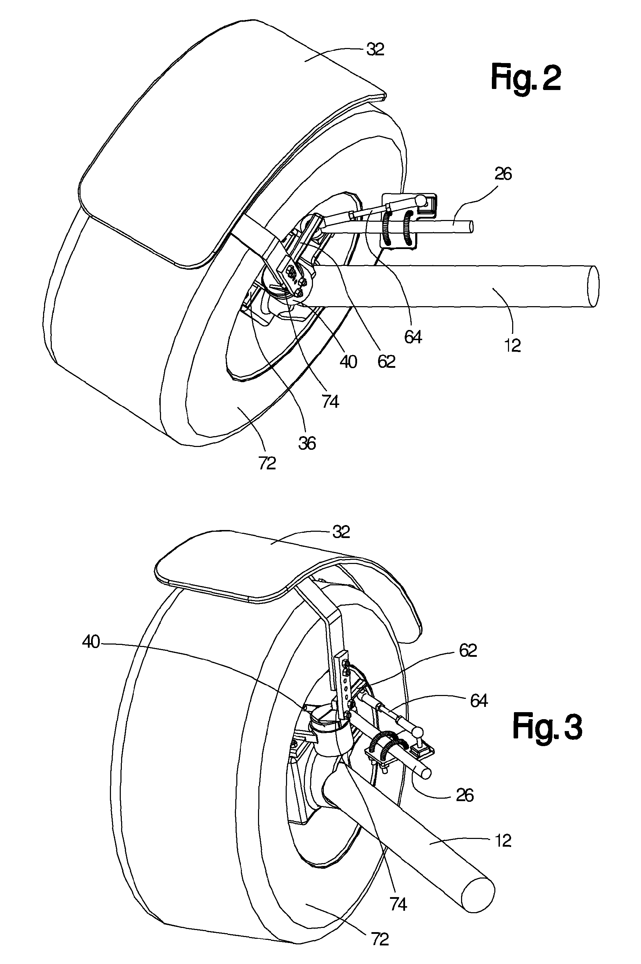

Beim Lenken überträgt der Verbindungszusammenbau 60 die Bewegung der Spurstange 26 auf das zweite Halterungselement 40 und auf den Kotschützer 32. Ein Bewegungsablauf ist anhand der Figuren 1 bis 3 erkennbar. Bei Geradeausstellung (Figur 1) erstreckt sich die an der Strebe 54 zum Anliegen kommende Fläche 74 des zweiten Halterungselements 40 parallel zur Vorwärtsrichtung V, so dass auch der Kotschützer 32 sich parallel zur Vorwärtsrichtung V erstreckt. Wird das Rad nach innen (d. h. das rechte Rad wird nach rechts) gelenkt, ergibt sich die in der Figur 2 dargestellte Situation, in der das zweite Halterungselement 40 und die Fläche 74 zwar auch nach rechts ausgelenkt sind, aber in geringerem Maße als die Nabenbaugruppe 14 mit dem Reifen 72. Analog werden das zweite Halterungselement 40 und die Fläche 74 beim Lenken nach außen weniger verschwenkt als die Nabenbaugruppe 14, s. Figur 3. Durch den gegenüber der Nabenbaugruppe 14 verringerten Schwenkwinkelbereich vermeidet man ein Anstoßen des Kotschützers am Fahrgestell.

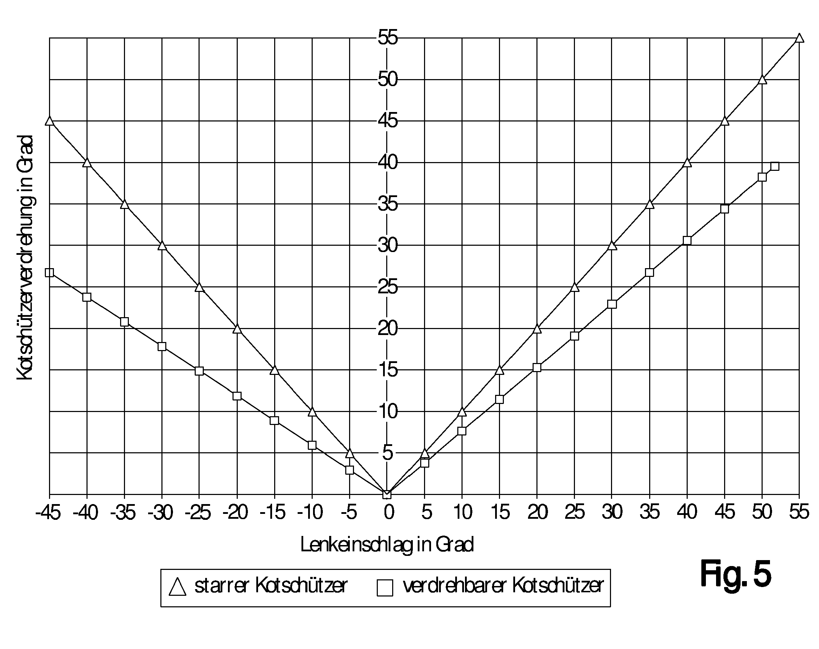

Der Zusammenhang zwischen dem Lenkwinkel des Rads um die Achse 16 (X-Achse) und dem Winkel des Kotschützers 32 um die Achse 42 (Y-Achse) ist in der Figur 5 dargestellt, in der zum Vergleich auch der Winkel eines starr mit dem Rad verbundenen Kotschützers eingetragen ist. Man erkennt die gegenüber einem starr mit dem Rad verbundenen Kotschützer kleinere Abhängigkeit des erfindungsgemäß aufgehängten Kotschützers 32 vom Lenkwinkel.

Der Verbindungszusammenbau 60 enthält nur relativ wenige Bauelemente und erfordert keine eine translatorische Bewegung erlaubenden Übertragungselemente, wie Langlochverbindungen. Dadurch arbeitet die Halterungsanordnung 34 auch in der schmutzbelasteten Arbeitsumgebung eines landwirtschaftlich genutzten Traktors sehr zuverlässig. Die Halterungselemente 36 und 40 dringen aufgrund der gewählten Positionierung der Schwenkachse 42 nicht in den Innenraum der Felge 70 ein, so dass die Halterungsanordnung 34 auch bei sehr kleinen Reifendurchmessern verwendbar ist.

## Patentansprüche

1. Halterungsanordnung (34) eines Kotschützers (32) für ein landwirtschaftliches Fahrzeug, mit einem ersten Halterungselement (36), das mit einem Achsgehäuse (12) oder einer Nabenbaugruppe (14) eines lenkbaren Rads des Fahrzeugs verbunden oder verbindbar ist, einem zweiten, den Kotschützer (32) haltenden Halterungselement (40), das um eine sich zumindest näherungsweise vertikal erstreckende Schwenkachse (42) drehbar mit dem ersten Halterungselement (36) verbunden ist, sowie mit einem Verbindungszusammenbau (60), der mit dem zweiten Halterungselement (40) verbunden und eingerichtet ist, bei einer Lenkbewegung der Nabenbaugruppe (14) eine zur Drehung der Nabenbaugruppe (14) gleichsinnige, ihr gegenüber jedoch untersetzte Drehung des zweiten Halterungselements (40) und somit des Kotschützers (32) zu bewirken, **dadurch gekennzeichnet, dass** der Verbindungszusammenbau (60) im Abstand von der Nabenbaugruppe (14) mit einem zur Erzeugung der Lenkbewegung des Rads eingerichteten Aktor (20) verbunden oder verbindbar ist.

2. Halterungsanordnung (34) nach Anspruch 1, **dadurch gekennzeichnet, dass** der Verbindungszusammenbau (60) mit einer Spurstange (26) verbunden oder verbindbar ist, die sich zwischen dem Aktor (20) und einem Spurstangenanbringungselement (30) der Nabenbaugruppe erstreckt.

3. Halterungsanordnung (34) nach Anspruch 1 oder 2, **dadurch gekennzeichnet, dass** der Verbindungszusammenbau (60) einen ersten, starr mit dem zweiten Halterungselement (40) verbundenen Hebel (62) und einen zweiten, mit dem Aktor (20) verbundenen Hebel (64) umfasst, und dass die Hebel (62, 64) untereinander um eine sich parallel zur Schwenkachse (42) des zweiten Halterungselements (40) am ersten Halterungselement (36) erstreckende Achse drehbar aneinander gekoppelt sind.

4. Halterungsanordnung (34) nach einem der Ansprüche 1 bis 3, **dadurch gekennzeichnet, dass** der Verbindungszusammenbau (60) um eine sich parallel zur Schwenkachse (42) des zweiten Halterungselements (40) am ersten Halterungselement (36) erstreckende Achse drehbar mit dem Aktor (20) verbunden oder verbindbar ist.

5. Halterungsanordnung (34) nach Anspruch 4, **dadurch gekennzeichnet, dass** der Verbindungszusammenbau (60) durch ein Kugelgelenk (68) mit dem Aktor (20) verbunden oder verbindbar ist.

6. Halterungsanordnung (34) nach einem der Ansprüche 1 bis 5, **dadurch gekennzeichnet, dass** die Schwenkachse (42) des zweiten Halterungselements (40) am ersten Halterungselement (36) gegenüber der Drehachse (16) der Nabenbaugruppe (14) am Achsgehäuse (12) quer zur Vorwärtsrichtung (V) des Traktors nach innen versetzt ist.

7. Landwirtschaftliches Fahrzeug mit einer lenkbaren Achse (10) und einer daran befestigten Halterungsanordnung (42) nach einem der vorhergehenden Ansprüche.
